# EUROPEAN PATENT APPLICATION

(11) **EP 4 831 403 A1**
(43) Date of publication of application: **28.10.2026**
(21) Application number: 25776782.2
(22) Date of filing: 11.03.2025
(51) Int. Cl.: E02F 9/02, F16H 57/04, F16H 61/02

(54) **WORK MACHINE AND METHOD FOR CONTROLLING WORK MACHINE**

(30) Priority: 25.03.2024 JP 2024047778
(71) Applicant: Komatsu Ltd., Tokyo 105-8316 (JP)
(72) Inventor: TAKASE, Yuki, Tokyo 105-8316 (JP); KAMEKURA, Hirotaka, Tokyo 105-8316 (JP)
(74) Representative: Flügel Preissner Schober Seidel
(86) International application number: PCT/JP2025/009120
(87) International publication number: WO 2025/204866

(57) **Abstract**

The work machine includes a vehicle body, a traveling body, a transmission, a traveling motor, a work implement, a lubrication pump, and a controller. The traveling body is configured to cause the vehicle body to travel. The transmission is connected to the traveling body. The traveling motor is connected to the transmission. The work implement is operably attached to the vehicle body. The lubrication pump is configured to supply lubricating oil to the transmission. The controller is configured to acquire traveling horsepower passing through the transmission. The controller is configured to calculate a required lubrication amount of the lubricating oil for the transmission, based on the traveling horsepower. The controller is configured to control a discharge rate of the lubrication pump, based on the required lubrication amount.

## Description

### Technical Field

The present disclosure relates to a work machine and a method for controlling a work machine.

### Background Art

Some work machines include a lubrication pump for supplying lubricating oil to a transmission. For example, the vehicle of PTL 1 includes an engine, a transmission, a lubrication pump, and a lubricating oil supply oil passage. The lubrication pump is driven by the engine and thus discharges lubricating oil. The lubricating oil is supplied to the transmission via the lubricating oil supply oil passage.

### Citation List

### Patent Literature

PTL 1: WO2006/009080A

### Summary of Invention

### Technical Problem

In the work machine, when traveling horsepower passing through the transmission is large, for example, when traveling uphill or during high-speed traveling or the like, the transmission requires a large amount of lubricating oil. When a lubrication pump having a large displacement is installed in the work machine for that purpose, the lubrication pump supplies a large amount of lubricating oil to the transmission even when traveling horsepower is small. Therefore, the energy efficiency of the work machine decreases. An object of the present disclosure is to appropriately lubricate the transmission and to improve the energy efficiency of the work machine.

### Solution to Problem

A work machine according to an aspect of the present disclosure includes a vehicle body, a traveling body, a transmission, a traveling motor, a work implement, a lubrication pump, and a controller. The traveling body is configured to cause the vehicle body to travel. The transmission is connected to the traveling body. The traveling motor is connected to the transmission. The work implement is operably attached to the vehicle body. The lubrication pump is configured to supply lubricating oil to the transmission. The controller is configured to acquire traveling horsepower passing through the transmission. The controller is configured to calculate a required lubrication amount of the lubricating oil for the transmission, based on the traveling horsepower. The controller is configured to control a discharge rate of the lubrication pump, based on the required lubrication amount.

A method according to another aspect of the present disclosure is a method executed by a controller for controlling a work machine. The work machine includes a vehicle body, a traveling body, a transmission, a traveling motor, a work implement, and a lubrication pump. The traveling body is configured to cause the vehicle body to travel. The transmission is connected to the traveling body. The traveling motor is connected to the transmission. The work implement is operably attached to the vehicle body. The lubrication pump is configured to supply lubricating oil to the transmission. The method includes: acquiring traveling horsepower passing through the transmission; calculating a required lubrication amount of the lubricating oil for the transmission, based on the traveling horsepower; and controlling a discharge rate of the lubrication pump, based on the required lubrication amount.

### Advantageous Effects of Invention

According to the present disclosure, the required lubrication amount of the lubricating oil for the transmission is calculated, based on the traveling horsepower. Then, the discharge rate of the lubrication pump is controlled, based on the calculated required lubrication amount. Therefore, an appropriate amount of lubricating oil is supplied to the transmission in accordance with the traveling horsepower without using a large-displacement lubrication pump. Thus, the transmission is appropriately lubricated and the energy efficiency of the work machine is improved.

### Brief Description of Drawings

[FIG. 1] FIG. 1 is a side view of a work machine according to an embodiment.
[FIG. 2] FIG. 2 is a block diagram showing the configuration of a drive system of the work machine.
[FIG. 3] FIG. 3 is a block diagram showing the configuration of a control system of the work machine.
[FIG. 4] FIG. 4 is a flowchart showing processing of lubrication control of the transmission.
[FIG. 5] FIG. 5 is a transition diagram of the control modes of a work implement motor.
[FIG. 6] FIG. 6 is a block diagram showing the configuration of a drive system of a work machine according to another embodiment.

### Description of Embodiments

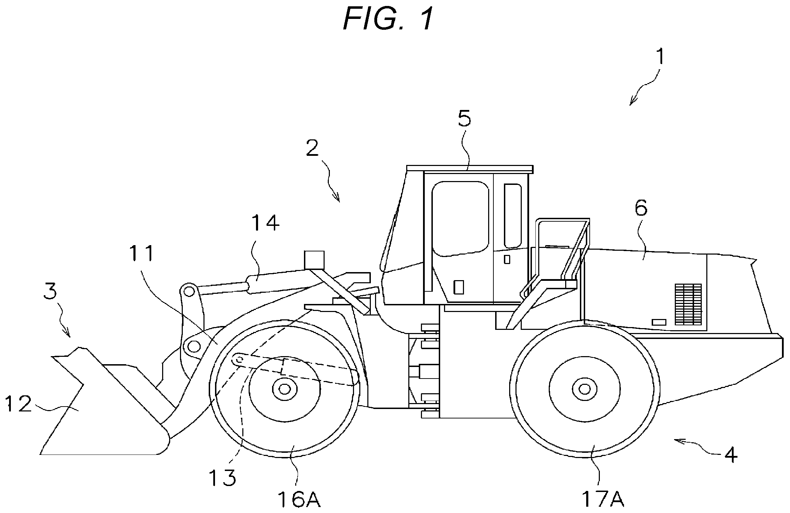

An embodiment of the present invention will be described below with reference to the drawings. FIG. 1 is a side view of a work machine 1 according to the embodiment. The work machine 1 according to the present embodiment is a wheel loader. As shown in FIG. 1, the work machine 1 includes a vehicle body 2, a work implement 3, and a traveling body 4. A cab 5 and a power compartment 6 are disposed on the vehicle body 2. An operator's seat, not shown, and an operation device, described later, are disposed in the cab 5. A part of a drive system, described later, is disposed in the power compartment 6.

The work implement 3 is used for work such as excavation. The work implement 3 is operably attached to the vehicle body 2. The work implement 3 includes a boom 11, a bucket 12, a boom cylinder 13, and a bucket cylinder 14. The boom cylinder 13 and the bucket cylinder 14 are hydraulic cylinders. As the boom cylinder 13 extends and retracts, the boom 11 operates. As the bucket cylinder 14 extends and retracts, the bucket 12 operates.

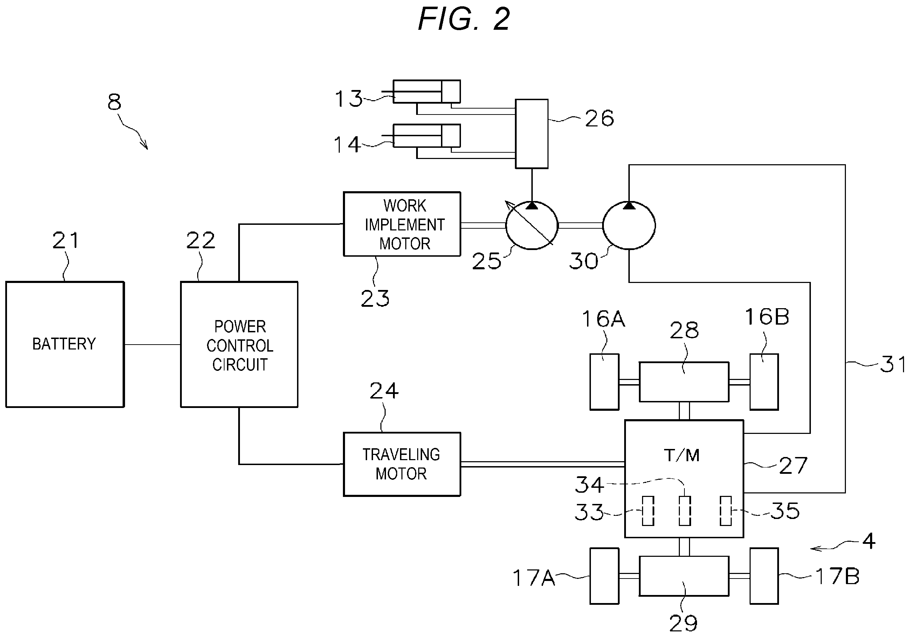

The traveling body 4 causes the work machine 1 to travel. FIG. 2 is a block diagram showing the configuration of a drive system 8 installed in the work machine 1. As shown in FIGS. 1 and 2, the traveling body 4 includes traveling wheels 16A, 16B, 17A, 17B. The traveling wheels 16A, 16B, 17A, 17B are rotatably supported on the vehicle body 2.

As shown in FIG. 2, the drive system 8 includes a battery 21, a power control circuit 22, a work implement motor 23, and a traveling motor 24. The work implement motor 23 and the traveling motor 24 are electric motors. The battery 21 supplies electric power to the work implement motor 23 and the traveling motor 24. The power control circuit 22 controls the electric power supplied to the work implement motor 23 and the traveling motor 24. The power control circuit 22 includes, for example, an inverter. The work implement motor 23 generates a driving force for driving the work implement 3. The traveling motor 24 generates a driving force for driving the traveling body 4.

The drive system 8 includes a work implement pump 25 and a control valve 26. The work implement pump 25 is a variable displacement hydraulic pump. The work implement pump 25 is connected to the work implement motor 23. The work implement pump 25 is driven by the work implement motor 23 and thus supplies hydraulic oil to the above-described cylinders 13, 14. The control valve 26 is connected to the work implement pump 25 and the cylinders 13, 14 via a hydraulic circuit. The control valve 26 includes a plurality of valves. The control valve 26 controls the flow rate of the hydraulic oil supplied from the work implement pump 25 to the cylinders 13, 14.

The drive system 8 includes a transmission 27, a front axle 28, and a rear axle 29. The traveling wheels 16A, 16B are connected to the transmission 27 via the front axle 28. The traveling wheels 17A, 17B are connected to the transmission 27 via the rear axle 29. The transmission 27 is connected to the traveling motor 24. The transmission 27 changes the speed of the driving force from the traveling motor 24 and transmits the driving force to the traveling body 4. The transmission 27 includes a plurality of gears 33 to 35. The transmission 27 transmits the driving force from the traveling motor 24 to the traveling body 4.

The drive system 8 includes a lubrication pump 30. The lubrication pump 30 is connected to the work implement motor 23. The lubrication pump 30 is driven by the work implement motor 23 and supplies lubricating oil to the transmission 27. The lubrication pump 30 is a fixed displacement pump such as a gear pump. The lubrication pump 30 discharges lubricating oil at a flow rate corresponding to the rotation speed of the work implement motor 23. The lubrication pump 30 is connected to the transmission 27 via a lubrication path 31. The lubricating oil discharged from the lubrication pump 30 is supplied to the transmission 27 via the lubrication path 31.

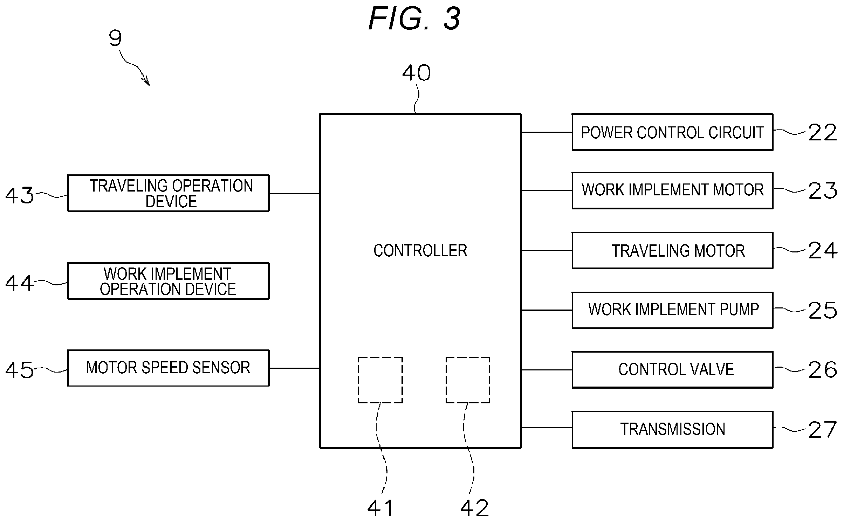

FIG. 3 is a block diagram showing the configuration of a control system 9 of the work machine 1. As shown in FIG. 3, the control system 9 includes a controller 40. The controller 40 controls the work machine 1. The controller 40 includes a processor 41 and a storage device 42. The processor 41 is, for example, a central processing unit (CPU). The processor 41 executes processing for controlling the work machine 1 according to a program. The storage device 42 includes a nonvolatile memory such as a ROM and a volatile memory such as a RAM. The storage device 42 may include a storage such as a hard disk or a solid-state drive (SSD). The storage device 42 stores a program and data for controlling the work machine 1.

The control system 9 includes a traveling operation device 43 and a work implement operation device 44. The traveling operation device 43 and the work implement operation device 44 are each manually operable by the operator of the work machine 1. The traveling operation device 43 is operated to control forward traveling, backward traveling, and turning of the work machine 1. The traveling operation device 43 includes, for example, an accelerator pedal, a steering wheel, and a lever. However, the traveling operation device 43 may include another member such as a switch. The traveling operation device 43 outputs a signal corresponding to the operation of the traveling operation device 43.

The work implement operation device 44 is operated to control the work implement 3. The work implement operation device 44 includes, for example, a lever. However, the work implement operation device 44 may be another member such as a switch or a pedal. The work implement operation device 44 outputs a signal corresponding to the operation of the work implement operation device 44.

The controller 40 receives a signal from the traveling operation device 43. The controller 40 acquires a traveling operation command for causing the work machine 1 to travel, based on the signal from the traveling operation device 43. The controller 40 controls the traveling motor 24 and the transmission 27 in response to the traveling operation command. For example, the controller 40 controls the power control circuit 22 to control the rotation speed and the output torque of the traveling motor 24. The controller 40 controls the transmission 27 to switch between forward traveling and backward traveling of the work machine 1. The controller 40 controls the transmission 27 to change the transmission ratio.

The control system 9 includes a motor speed sensor 45. The motor speed sensor 45 detects the rotation speed of the traveling motor 24. The controller 40 receives a signal indicating the rotation speed of the traveling motor 24 from the motor speed sensor 45. The controller 40 acquires the rotation speed of the traveling motor 24, based on the signal from the traveling motor 24.

The controller 40 receives a signal from the work implement operation device 44. The controller 40 acquires a work operation command for causing the work implement 3 to operate, based on the signal from the work implement operation device 44. The work operation command includes, for example, the amount of operation of the work implement operation device 44 by the operator. The controller 40 controls the work implement pump 25 and the control valve 26 such that the work implement 3 operates in response to the work operation command. The controller 40 controls the work implement motor 23 such that the work implement 3 operates in response to the work operation command. For example, the controller 40 determines a target flow rate of the work implement pump 25 in accordance with the amount of operation of the work implement operation device 44. The controller 40 controls the rotation speed of the work implement motor 23, based on the target flow rate of the work implement pump 25.

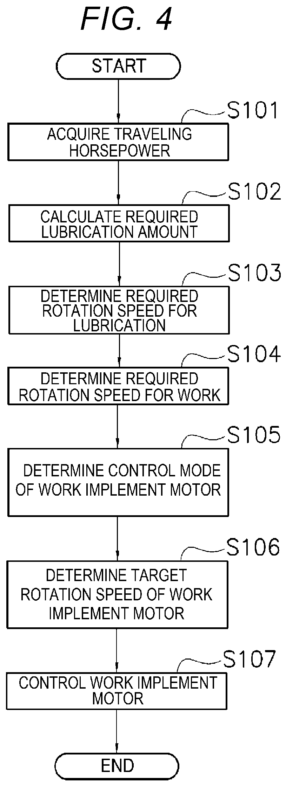

Next, the lubrication control of the transmission 27 in the work machine 1 will be described. In the present embodiment, the controller 40 controls the rotation speed of the work implement motor 23 and thus controls the amount of lubricating oil supplied from the lubrication pump 30 to the transmission 27. FIG. 4 is a flowchart showing processing of lubrication control of the transmission 27.

As shown in FIG. 4, in step S101, the controller 40 acquires traveling horsepower passing through the transmission 27. For example, the controller 40 calculates the traveling horsepower, based on the rotation speed and the output torque of the traveling motor 24.

In step S102, the controller 40 calculates a required lubrication amount for the transmission 27. The required lubrication amount is the flow rate per unit time of lubricating oil of the transmission 27. The controller 40 calculates the required lubrication amount, based on the traveling horsepower. For example, the controller 40 determines the required lubrication amount that increases in accordance with an increase in the traveling horsepower.

In step S103, the controller 40 determines a required rotation speed for lubrication of the work implement motor 23. The required rotation speed for lubrication is the rotation speed of the work implement motor 23 for causing the lubrication pump 30 to discharge the required lubrication amount of lubricating oil. The controller 40 determines the required rotation speed for lubrication of the work implement motor 23, based on the required lubrication amount and the displacement of the lubrication pump 30.

In step S104, the controller 40 determines a required rotation speed for work of the work implement motor 23. The required rotation speed for work is the rotation speed of the work implement motor 23 for causing the work implement 3 to operate in response to the work operation command. The controller 40 determines the required rotation speed for work of the work implement motor 23, based on the work operation command.

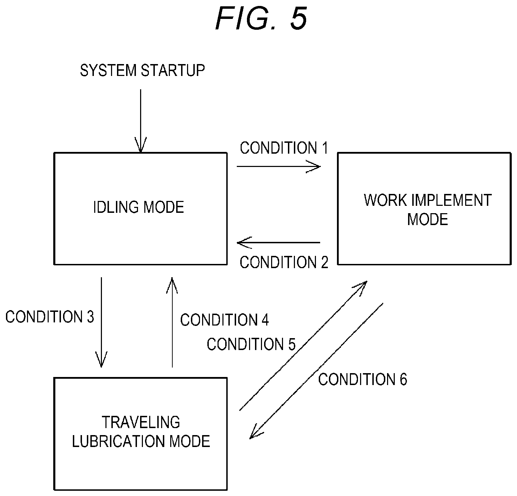

In step S105, the controller 40 determines a control mode of the work implement motor 23. FIG. 5 is a transition diagram of the control modes of the work implement motor 23. As shown in FIG. 5, the control modes of the work implement motor 23 include an idling mode, a work implement mode, and a traveling lubrication mode. The controller 40 determines the control mode of the work implement motor 23, based on the required rotation speed for work, a required rotation speed for traveling, and an idling rotation speed. The idling rotation speed is the target rotation speed of the work implement motor 23 at the time of idling.

When the system of the work machine 1 is started, the control mode of the work implement motor 23 is the idling mode. When the control mode of the work implement motor 23 is the idling mode, the controller 40 in step S106 determines the idling rotation speed as the target rotation speed of the work implement motor 23.

As shown in FIG. 5, when Condition 1 is satisfied in a state where the control mode is the idling mode, the controller 40 changes the control mode from the idling mode to the work implement mode. Condition 1 is that the required rotation speed for work is higher than the idling rotation speed and that the required rotation speed for work is higher than the required rotation speed for lubrication. When the control mode of the work implement motor 23 is the work implement mode, the controller 40 in step S106 determines the required rotation speed for work as the target rotation speed of the work implement motor 23.

When Condition 2 is satisfied in a state where the control mode is the work implement mode, the controller 40 changes the control mode from the work implement mode to the idling mode. The Condition 2 is that the required rotation speed for work is equal to or lower than the idling rotation speed and that the required rotation speed for lubrication is equal to or lower than the idling rotation speed.

When Condition 3 is satisfied in a state where the control mode is the idling mode, the controller 40 changes the control mode from the idling mode to the traveling lubrication mode. Condition 3 is that the required rotation speed for lubrication is higher than the idling rotation speed and that the required rotation speed for lubrication is higher than the required rotation speed for work. When the control mode of the work implement motor 23 is the traveling lubrication mode, the controller 40 in step S106 determines the required rotation speed for lubrication as the target rotation speed of the work implement motor 23.

When Condition 4 is satisfied in a state where the control mode is the work implement mode, the controller 40 changes the control mode from the traveling lubrication mode to the idling mode. Condition 4 is that the required rotation speed for work is equal to or lower than the idling rotation speed and that the required rotation speed for lubrication is equal to or lower than the idling rotation speed.

When Condition 5 is satisfied in a state where the control mode is the traveling lubrication mode, the controller 40 changes the control mode from the traveling lubrication mode to the work implement mode. Condition 5 is that the required rotation speed for work is higher than the idling rotation speed and that the required rotation speed for work is higher than the required rotation speed for lubrication. When Condition 6 is satisfied in a state where the control mode is the work implement mode, the controller 40 changes the control mode from the work implement mode to the traveling lubrication mode. Condition 6 is that the required rotation speed for work is lower than the traveling lubrication rotation speed and that the required rotation speed for lubrication is higher than the idling rotation speed.

In step S107, the controller 40 controls the work implement motor 23. The controller 40 controls the work implement motor 23, based on the target rotation speed. When the control mode of the work implement motor 23 is the idling mode, the controller 40 controls the work implement motor 23 such that the rotation speed of the work implement motor 23 reaches the idling rotation speed.

When the control mode of the work implement motor 23 is the work mode, the controller 40 controls the work implement motor 23 such that the rotation speed of the work implement motor 23 reaches the required rotation speed for work. Therefore, the controller 40 controls the rotation speed of the work implement motor 23 in accordance with the operation of the work implement operation device 44.

When the control mode of the work implement motor 23 is the traveling lubrication mode, the controller 40 controls the work implement motor 23 such that the rotation speed of the work implement motor 23 reaches the required rotation speed for lubrication. Thus, the controller 40 controls the rotation speed of the work implement motor 23 in accordance with the traveling horsepower of the transmission 27.

In the work machine 1 according to the present embodiment described above, the required lubrication amount of lubricating oil for the transmission 27 is calculated, based on the traveling horsepower. Then, as the rotation speed of the work implement pump 25 is controlled based on the calculated required lubrication amount, the discharge rate of the lubrication pump 30 is controlled. Therefore, an appropriate amount of lubricating oil is supplied to the transmission 27 in accordance with the traveling horsepower without using a large-displacement lubrication pump 30. Thus, the transmission 27 is appropriately lubricated and the energy efficiency of the work implement pump 25 is improved.

While one embodiment of the present invention is described above, the present invention is not limited to the above-described embodiment, and various modifications can be made without departing from the spirit of the invention.

The work machine 1 is not limited to a wheel loader and may be another machine such as a bulldozer, an excavator, or a motor grader. The configuration of the work machine 1 is not limited to that of the above embodiment and may be changed. For example, the traveling body 4 may include a crawler track.

The lubrication pump 30 may be a variable displacement pump. In that case, the controller 40 may determine a target displacement of the variable displacement pump, based on the required lubrication amount. For example, the controller 40 may determine the target displacement, based on the rotation speed of the work implement motor 23 and the required lubrication amount. The controller 40 may control the lubrication pump 30, based on the target displacement. Also in this case, an appropriate amount of lubricating oil is supplied to the transmission 27 in accordance with the traveling horsepower without using a large-displacement lubrication pump 30. Thus, the transmission 27 is appropriately lubricated and the energy efficiency of the work implement pump 25 is improved.

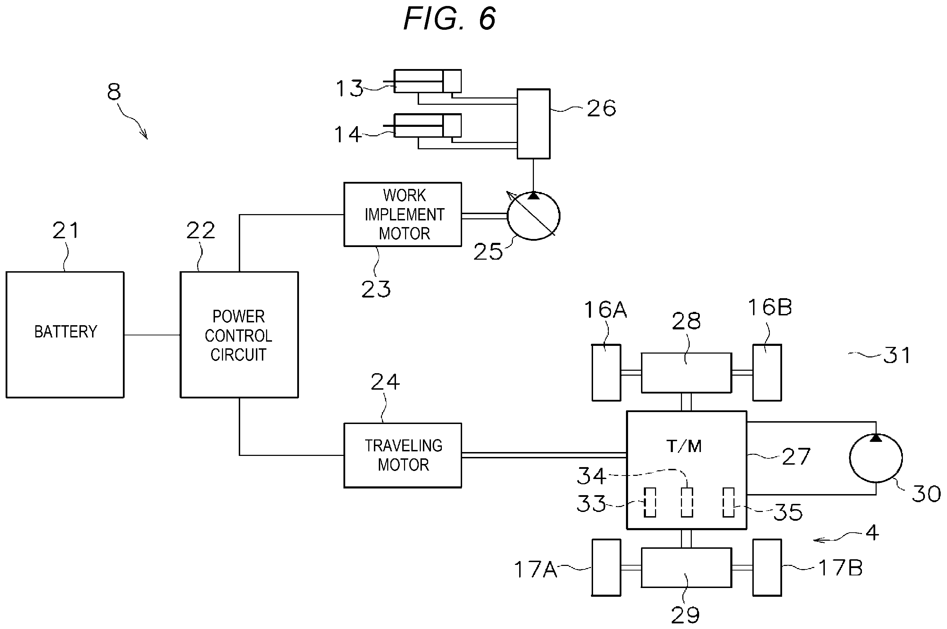

The lubrication pump 30 may be driven by a device other than the work implement motor 23. For example, FIG. 6 is a block diagram showing the configuration of a drive system of the work machine 1 according to another embodiment. As shown in FIG. 6, the lubrication pump 30 may be driven by the driving force from the traveling motor 24.

### Industrial Applicability

According to the present disclosure, the transmission is appropriately lubricated and the energy efficiency of the work machine is improved.

### Reference Signs List

2: vehicle body
3: work implement
4: traveling body
23: work implement motor
24: traveling motor
27: transmission
30: lubrication pump
40: controller

## Claims

1. A work machine comprising:
a vehicle body;
a traveling body configured to cause the vehicle body to travel;
a transmission connected to the traveling body;
a traveling motor connected to the transmission;
a work implement operably attached to the vehicle body;
a lubrication pump configured to supply lubricating oil to the transmission; and
a controller configured to acquire traveling horsepower passing through the transmission, calculate a required lubrication amount of lubricating oil for the transmission, based on the traveling horsepower, and control a discharge rate of the lubrication pump, based on the required lubrication amount.

2. The work machine according to claim 1, further comprising:
a work implement motor configured to drive the work implement, wherein
the lubrication pump is a fixed displacement pump driven by the work implement motor, and
the controller is configured to
determine a target rotation speed of the work implement motor, based on the required lubrication amount, and
control the work implement motor, based on the target rotation speed.

3. The work machine according to claim 2, wherein
the controller is configured to
determine a required rotation speed for lubrication of the work implement motor, based on the required lubrication amount,
acquire an operation command for causing the work implement to operate,
determine a required rotation speed for work of the work implement motor for causing the work implement to operate, based on the operation command,
determine the target rotation speed of the work implement motor, based on the required rotation speed for lubrication, when the required rotation speed for lubrication is higher than the required rotation speed for work,
determine the target rotation speed of the work implement motor, based on the required rotation speed for work, when the required rotation speed for work is higher than the required rotation speed for lubrication, and
control the work implement motor, based on the target rotation speed.

4. The work machine according to claim 2, wherein
the controller is configured to
acquire a predetermined idling rotation speed of the work implement motor,
determine a required rotation speed for lubrication of the work implement motor, based on the required lubrication amount,
determine the target rotation speed of the work implement motor, based on the idling rotation speed, when the idling rotation speed is higher than the required rotation speed for lubrication,
determine the target rotation speed of the work implement motor, based on the required rotation speed for lubrication, when the required rotation speed for lubrication is higher than the idling rotation speed, and
control the work implement motor, based on the target rotation speed.

5. The work machine according to claim 2, wherein
the controller is configured to determine the target rotation speed of the work implement motor, based on a displacement of the lubrication pump and the required lubrication amount.

6. The work machine according to claim 1, further comprising:
a work implement motor configured to drive the work implement, wherein
the lubrication pump is a variable displacement pump driven by the work implement motor, and
the controller is configured to
determine a target displacement of the variable displacement pump, based on the required lubrication amount, and
control the lubrication pump, based on the target displacement.

7. A method executed by a controller for controlling a work machine including a vehicle body, a traveling body configured to cause the vehicle body to travel, a transmission connected to the traveling body, a traveling motor connected to the transmission, a work implement operably attached to the vehicle body, and a lubrication pump configured to supply lubricating oil to the transmission, the method comprising:
acquiring traveling horsepower passing through the transmission;
calculating a required lubrication amount of lubricating oil for the transmission, based on the traveling horsepower; and
controlling a discharge rate of the lubrication pump, based on the required lubrication amount.

8. The method according to claim 7, wherein
the work machine further includes a work implement motor configured to drive the work implement,
the lubrication pump is a fixed displacement pump driven by the work implement motor, and
the method comprises:
determining a target rotation speed of the work implement motor, based on the required lubrication amount; and
controlling the work implement motor, based on the target rotation speed.

9. The method according to claim 8, comprising:
determining a required rotation speed for lubrication of the work implement motor, based on the required lubrication amount;
acquiring an operation command for causing the work implement to operate;
determining a required rotation speed for work of the work implement motor for causing the work implement to operate, based on the operation command;
determining the target rotation speed of the work implement motor, based on the required rotation speed for lubrication, when the required rotation speed for lubrication is higher than the required rotation speed for work;
determining the target rotation speed of the work implement motor, based on the required rotation speed for work, when the required rotation speed for work is higher than the required rotation speed for lubrication; and
controlling the work implement motor, based on the target rotation speed.

10. The method according to claim 8, comprising:
acquiring a predetermined idling rotation speed of the work implement motor;
determining a required rotation speed for lubrication of the work implement motor, based on the required lubrication amount;
determining the target rotation speed of the work implement motor, based on the idling rotation speed, when the idling rotation speed is higher than the required rotation speed for lubrication;
determining the target rotation speed of the work implement motor, based on the required rotation speed for lubrication, when the required rotation speed for lubrication is higher than the idling rotation speed; and
controlling the work implement motor, based on the target rotation speed.

11. The method according to claim 8, comprising
determining the target rotation speed of the work implement motor, based on a displacement of the lubrication pump and the required lubrication amount.

12. The method according to claim 7, wherein
the work machine further includes a work implement motor configured to drive the work implement,
the lubrication pump is a variable displacement pump driven by the work implement motor, and
the method comprises:
determining a target displacement of the variable displacement pump, based on the required lubrication amount, and
controlling the lubrication pump, based on the target displacement.
